# EUROPÄISCHE PATENTANMELDUNG

(11) **EP 0 872 716 A1**
(43) Veröffentlichungstag der Anmeldung: **21.10.1998**
(21) Anmeldenummer: 98250133.0
(22) Anmeldetag: 17.04.1998
(51) Int. Cl.: G01F 7/00, G01F 15/00

(54) **Verbundwasserzähler**

(30) Priorität: 18.04.1997 DE 19717726
(71) Anmelder: H. MEINECKE AG, D-30880 Laatzen (DE)
(72) Erfinder: Beddies, Uwe, 30966 Hemmingen (DE)
(74) Vertreter: Seewald, Jürgen, Dipl.-Ing.

(57) **Zusammenfassung**

Die vorliegende Erfindung betrifft einen Verbundwasserzähler, bestehend aus einem Haupt- und einem Nebenzähler sowie einem Umschaltventil. Das Umschaltventil besitzt ein entgegen der Strömung federbelastetes Verschlußglied, welches in Schließstellung an einem Ventilsitz anliegt und den Durchfluß durch den Hauptzähler bei Erreichen eines vorbestimmten Grenzdurchflusses freigibt bzw. sperrt. Es besteht die Aufgabe, einen derartigen Zähler dahingehend zu verbessern, daß dessen Umschaltventil sehr einfach aufgebaut ist, einen sehr geringen Platzbedarf benötigt sowie im geöffneten Zustand geringe Druckverluste verursacht. Gelöst wird diese Aufgabe dadurch, daß das Verschlußglied des Umschaltventils als geteilte Klappe ausgebildet ist, deren beide Flügel (14, 15) an einer in ihrer Teilungsebene liegenden Schwenkachse (13) scharnierartig miteinander verbunden sind, wobei der konstruktiv bedingt Spalten aufweisende Bereich der Schwenkachse (13) auf der stromauf liegenden Seite der Klappe durch eine Flachdichtung (17) abgedeckt ist.

## Beschreibung

Die vorliegende Erfindung betrifft einen Verbundwasserzähler, bestehend aus einem Haupt- und einem Nebenzähler sowie einem Umschaltventil mit einem entgegen der Strömung federbelasteten Verschlußglied, welches in Schließstellung an einem Ventilsitz anliegt und den Durchfluß durch den Hauptzähler bei Erreichen eines vorbestimmten Grenzdurchflusses freigibt bzw. sperrt.

Verbundwasserzähler werden in Fällen angewendet, in denen der Meßbereich eines einfachen Zählers nicht ausreicht, um alle auftretenden Durchflüsse zu erfassen. Sie bestehen aus einem Großwasserzähler als Hauptzähler, einem Hauswasserzähler als Nebenzähler sowie einem Umschaltventil. Das Umschaltventil steuert die Zu- und Abschaltung des Hauptzählers, der in aller Regel als Woltmannzähler ausgeführt ist und die Volumenmessung nur bei größeren, vorbestimmten Durchflüssen zusätzlich zum Nebenzähler übernimmt.

Es sind Verbundwasserzähler bekannt, bei denen die Umschaltventile als gewichtsbelastete Schwenkklappen ausgebildet sind (z. B. US 41 00 800), die beim öffnen den Durchströmquerschnitt völlig freigeben. Die Klappe und der mit ihr verbundene Ventilteller schwenkt dabei um einen seitlich vom Durchströmquerschnitt liegenden Drehpunkt. Der Nachteil dieser Anordnung liegt darin, daß für das Schwenken der Klappe viel Platz benötigt wird, was zu relativ großen und schweren Verbundwasserzählern führt. Des weiteren sind für den Ventilsitz aufwendige Profildichtungen erforderlich.

Weiterhin sind Verbundwasserzähler der eingangs genannten Art beispielsweise aus DE 37 32 703 A1, DE 37 40 531 A1 oder DE 39 24 147 C1 bekannt. Bei diesen Zählern ist das Verschlußglied des Umschaltventils translatorisch auf einer zentral in Strömungsrichtung liegenden Achse geführt und mit einer Feder belastet, die es entgegen der Strömungsrichtung in Anlage an einen Ventilsitz drückt. Ab einer vorbestimmten Durchflußmenge hebt das Verschlußglied unter Überwindung der Federkraft vom Ventilsitz ab und verschiebt sich in Strömungsrichtung. Dadurch wird ein ringförmiger Durchströmquerschnitt freigegeben.

Derartig aufgebaute Umschaltventile haben gegenüber dem o.g. Stand der Technik einen geringeren Platzbedarf, bauen aber in Strömungsrichtung immer noch recht lang, was sich negativ auf die Länge und das Gewicht des Verbundwasserzählers niederschlägt. Zudem sind diese bekannten Umschaltventile aufwendig und damit teuer, da sie aus relativ vielen Bauteilen zusammengesetzt sind und für ihre ordnungsgemäße Funktion Profildichtungen benötigen. Weitere Nachteile sind darin zu sehen, daß sie in ihrer Offenstellung den Strömungsquerschnitt einengen und damit nicht unerhebliche Druckverluste verursachen sowie als Rückschlagventile nur bedingt geeignet sind.

Aufgabe der vorliegenden Erfindung ist es daher, einen gattungsgemäßen Verbundwasserzähler zur Verfügung zu stellen, dessen Umschaltventil sehr einfach aufgebaut ist, einen sehr geringen Platzbedarf benötigt sowie im geöffneten Zustand geringe Druckverluste verursacht.

Erfindungsgemäß wird diese Aufgabe mittels eines Verbundwasserzählers der eingangs genannten Art dadurch gelöst, daß das Verschlußglied des Umschaltventils als geteilte Klappe ausgebildet ist, deren beiden Flügel an einer in ihrer Teilungsebene liegenden Schwenkachse scharnierartig miteinander verbunden sind, wobei der konstruktiv bedingt Spalten aufweisende Bereich der Schwenkachse auf der stromauf liegenden Seite der Klappe durch eine Flachdichtung abgedeckt ist.

Dadurch, daß das Verschlußglied des Umschaltventils geteilt ausgeführt ist und beide Flügel um eine in der Teilungsebene liegende gemeinsame Achse schwenken, wird der Durchfluß durch den Hauptzähler freigegeben, ohne daß das Verschlußglied translatorisch bewegt oder völlig herausgeschwenkt werden muß. Beide Flügel beanspruchen in geöffneter Position weniger Platz als die bereits bekannten Lösungen. Dieser geringere Platzbedarf kann für eine Verkürzung der Baulänge eines Verbundwasserzählers genutzt werden.

Das erfindungsgemäße Umschaltventil hat auch wesentlich geringere Druckverluste als die bekannten Umschaltventile (siehe z. B. DE 37 32 703 A1), bei denen die Verschlußglieder in Offenstellung in der Strömung verbleiben. Bei der vorliegenden Lösung bleibt das Verschlußglied des Ventils zwar auch ständig in der Strömung, aber beim öffnen der Flügel verringert sich deren angeströmte Fläche; d.h. der Druckverlust wird immer kleiner und ist bei völlig geöffneten Flügeln am geringsten.

Die Klappe weist aufgrund der erforderlichen Anlenkung der Flügel an die Schwenkachse in diesem Bereich konstruktiv bedingte Spalte auf, die eine Schleichströmung und damit Meßfehler verursachen würden. Um dies zu vermeiden, ist die Klappe zumindest in diesem Bereich auf ihrer stromauf liegenden Seite mit einer Flachdichtung abgedeckt.

In vorteilhafter Ausgestaltung der Erfindung erstreckt sich die Flachdichtung nicht nur im Bereich der Schwenkachse, sondern sie liegt bei geschlossener Klappe zudem dichtend am Ventilsitz an. Damit ist für den dichten Sitz des geteilten Verschlußgliedes nur noch eine Dichtung erforderlich, die aus flachem Material einfach hergestellt werden kann. Andere Konstruktionen müssen mehr als eine und dazu besondere Profildichtungen verwenden.

In weiterer, vorteilhafter Ausgestaltung der Erfindung ist die Flachdichtung formschlüssig auf der Klappe befestigt. Dazu sind auf den Flügeln der Klappe Noppen angeordnet, auf denen die Flachdichtung in Langlöchern geführt ist. Diese Langlöcher erstrecken sich in einer Richtung senkrecht zur Schwenkachse. Durch diese Lösung ist die Flachdichtung sicher auf der stromauf liegenden Seite der Klappe fixiert. Dieser Vorteil ist aber nur von untergeordneter Bedeutung. Wesentlicher ist, daß aufgrund dieser Konstruktion die Flachdichtung beim Öffnen der Flügel nicht gedehnt, sondern nur gebogen wird. Durch das Biegen der Flachdichtung um die Schwenkachse verkürzt sie sich relativ gesehen auf den Flügeln, d.h., sie rutscht von deren Rändern weg. Aus diesem Grunde ist die Flachdichtung mit Langlöchern versehen, deren Länge dem relativen Verkürzungsweg der Flachdichtung auf den Flügeln entspricht. Die Langlöcher ermöglichen so eine zwängungsfreie Führung der Flachdichtung auf den Noppen der Flügel.

Die einfache Flachdichtung der erfindungsgemäßen Lösung ist auch bei Rückwärtsströmung, wenn die Umschaltventile als Rückschlagventile arbeiten sollen, einwandfrei dicht. Um diese Funktion zu gewährleisten, ist im Bereich der Schwenkachse stromauf ein Steg vorgesehen, an dem sich die Flachdichtung abstützt, so daß sie bei geschlossener Klappe stets dicht an dieser anliegt, also nicht von dieser weggedrückt werden kann.

Die Flügel der Klappe sind nach einem weiterbildenden Merkmal der vorliegenden Erfindung durch Federkräfte um die Schwenkachse in Richtung Schließstellung belastet. Es können eine oder mehrere Federn verwendet werden. Bei geringem Durchfluß überwiegen die Federkraftmomente und das Ventil bleibt geschlossen. Bei großem Durchfluß resultieren aus der Druckdifferenz am Verschlußglied auch große Öffnungskraftmomente, die die Flügel gegen die Federkraftmomente öffnen bzw. offen halten. Da die Federkraftmomente mit zunehmenden öffnungswinkeln der Flügel größer werden, was nicht erwünscht ist, sind an den Stellen, an denen die wenigstens eine Feder ihre Kraft auf die Flügel überträgt, Kulissen angeordnet, in denen die Federenden geführt sind. Diese Führung ist so gestaltet, daß der Schwenkwinkel der Federenden mit zunehmendem Öffnen der Flügel hinter deren Schwenkwinkel zurückbleibt. Durch diese Maßnahme wird die Zunahme der Federkraftmomente beim Öffnen der Flügel kompensiert, zumindest aber verringert.

Die Erfindung wird nachstehend anhand eines Ausführungsbeispieles näher erläutert. In der dazugehörigen Zeichnung zeigt:
- Fig. 1: einen Längsschnitt durch einen Verbundwasserzähler mit eingebautem Umschaltventil-Einsatz und geöffnetem Ventil;
- Fig. 2: eine perspektivische Ansicht der stromab liegenden Seite des Umschaltventil-Einsatzes mit in geschlossenem Ventil;
- Fig. 3: einen Schnitt A-A gemäß Fig. 2;
- Fig. 4: eine Einzelheit B gemäß Fig. 2 in vergrößertem Maßstab, und
- Fig. 5: einen Schnitt gemäß Fig. 3 bei vollständig geöffnetem Ventil.
- Fig. 6: eine perspektivische Ansicht der stromab liegenden Seite des Umschaltventil-Einsatzes mit geschlossenem Ventil in einer zweiten Ausführungsform, und
- Fig. 7: einen Schnitt C-C gemäß Fig. 6.

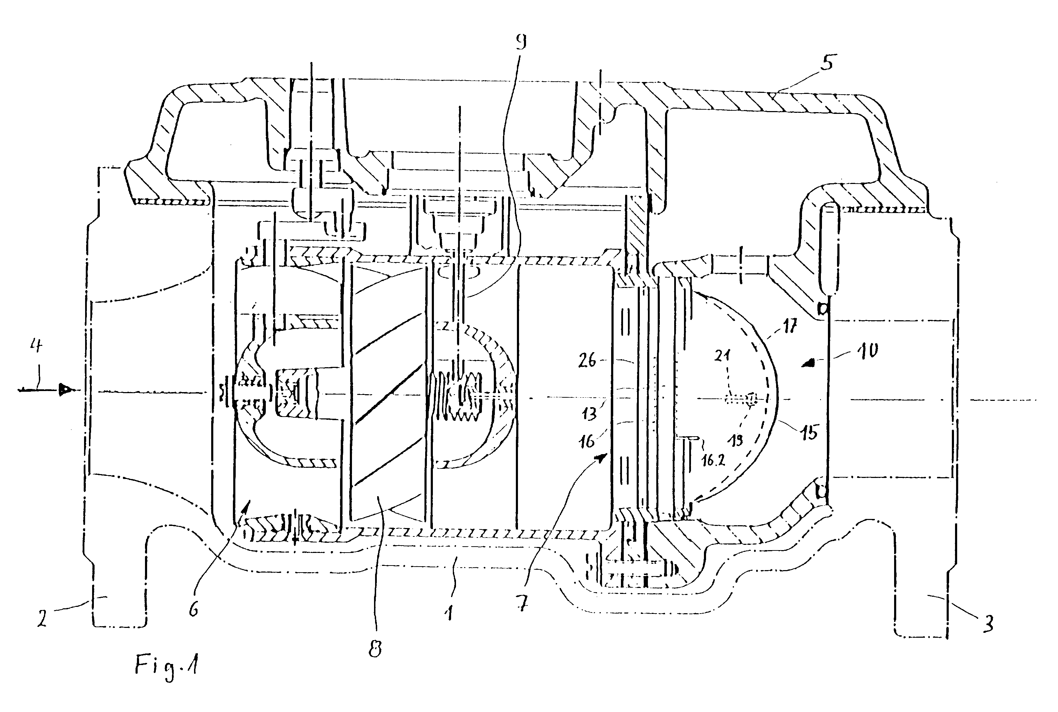

In der Schnittdarstellung gemäß Fig. 1 ist das Hauptzählergehäuse 1 mit Strich-Punkt-Linien dargestellt. Es besitzt zwei Flansche 2, 3 zum Anschluß an eine Rohrleitung. Die Strömungsrichtung durch das Hauptzählergehäuse 1 ist mit einem Pfeil 4 angedeutet.

Als Nebenzähler, der in der Zeichnung nicht dargestellt ist, kommt ein standardmäßiger Hauswasserzähler zur Anwendung, der über Anschlußstutzen außen am Gehäuse 1 des Hauptzählers befestigt ist, wie das z. B. aus der DE 37 32 703 A1 hervorgeht.

Das Hauptzählergehäuse 1 ist mit einer Kopföffnung versehen, die durch einen Gehäusedeckel 5 verschlossen ist. An diesem Gehäusedeckel 5 hängen ein Meßeinsatz 6 sowie ein Umschaltventil-Einsatz 7. Diese Baugruppen 5, 6, 7 können problemlos als Einheit in das Hauptzählergehäuse 1 eingesetzt bzw. aus diesem herausgenommen werden.

Der Meßeinsatz 6 besteht in bekannter Weise aus einem Woltmann-Meßflügel 8, dessen Drehbewegung über eine Welle 9 auf ein in der Zeichnung nicht dargestelltes Zählwerk übertragen wird. Da Meßeinsätze dieser Art bekannt sind, kann hier auf eine Beschreibung weiterer Einzelheiten verzichtet werden.

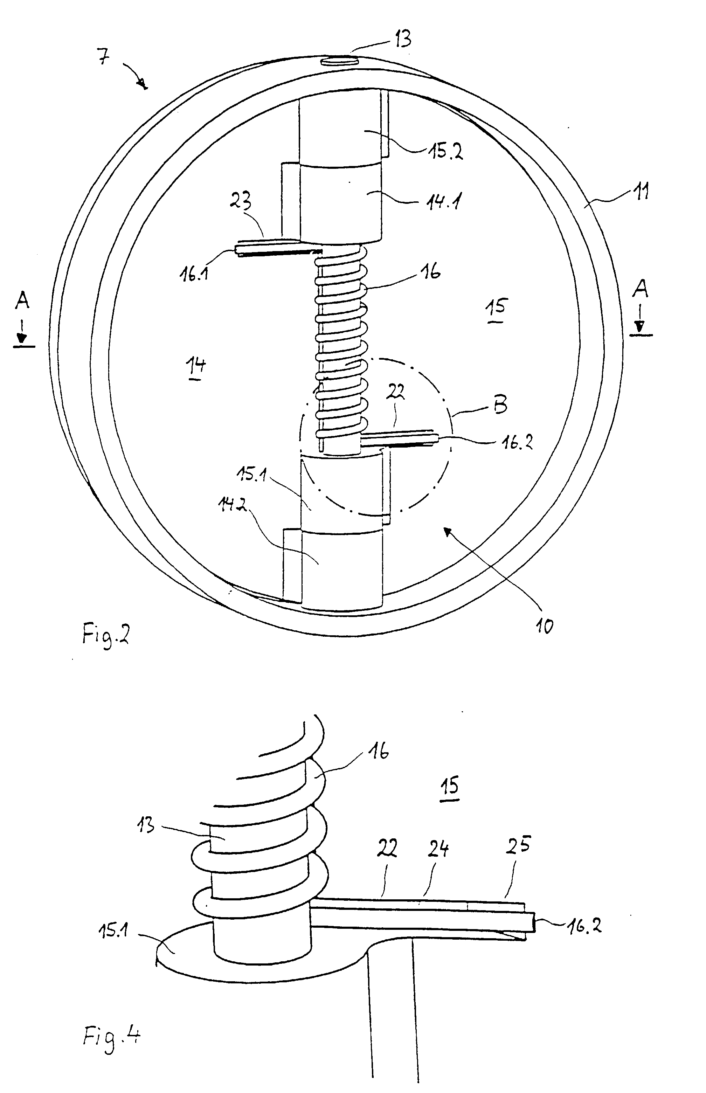

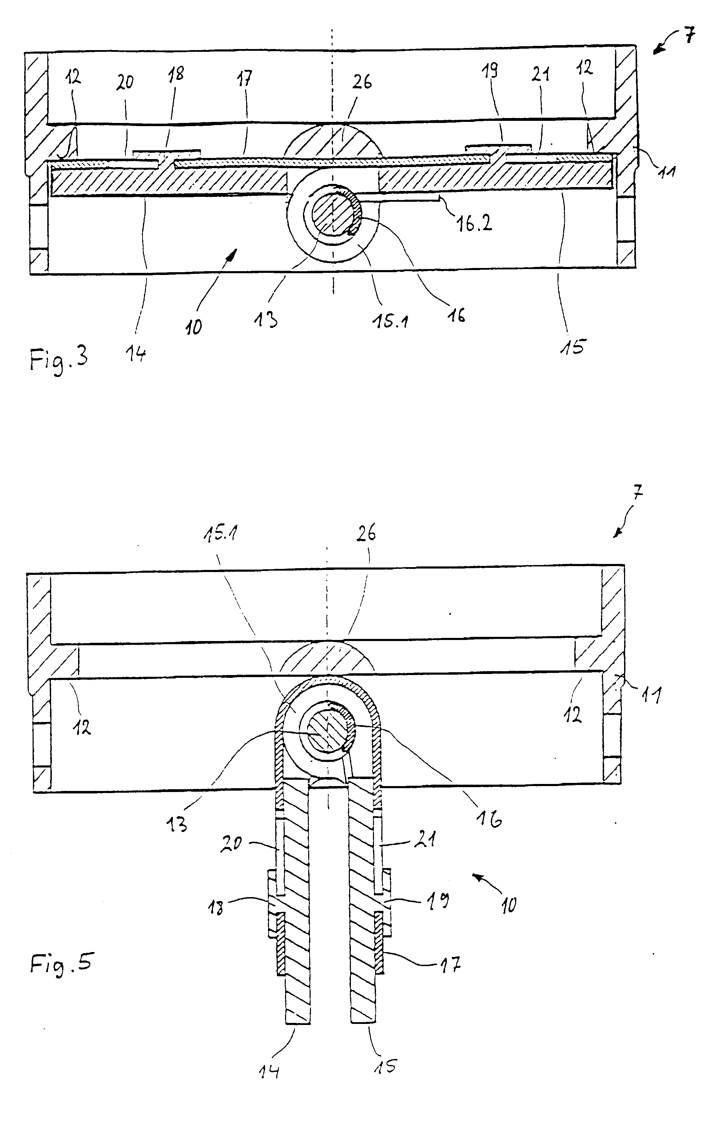

Am stromab liegenden Ende des Meßeinsatzes 6 ist der Umschaltventil-Einsatz 7 angeordnet und dicht mit diesem verbunden. In diesem Umschaltventil-Einsatz 7 ist das erfindungswesentliche Umschaltventil 10 angeordnet. Er besteht aus einem Gehäuse 11 mit kreisförmigem Durchströmquerschnitt, in dem ein Ventilsitz 12 ausgebildet ist. Des weiteren ist im Durchmesser des Gehäuses 11 eine Schwenkachse 13 gelagert, an der zwei Flügel 14, 15 als Verschlußglieder des Umschaltventils 10 angelenkt sind. Dazu sind die Flügel 14, 15 mit Augen 14.1, 14.2 bzw. 15.1, 15.2 versehen, die von der Schwenkachse 13 durchsetzt werden. Wie am besten aus Fig. 2 hervorgeht, liegt die Schwenkachse 13 zwischen den Augen 14.1, 15.2 und 14.2, 15.1 frei. In diesem Bereich ist auf der Schwenkachse 13 eine vorgespannte Spiralfeder 16 angeordnet, deren Federenden 16.1, 16.2 auf den Flügeln 14, 15 aufliegen und diese in Schließrichtung beaufschlagen. Die Flügel 14, 15 liegen daher bei geringen Durchflüssen, bei denen der Hauptzähler nicht freigegeben werden soll, am Ventilsitz 12 an, wie aus Fig. 3 hervorgeht. Um einen dichten Sitz der Flügel 14, 15 am Ventilsitz 12 zu gewährleisten, ist auf der stromauf liegenden Seite der Flügel 14, 15 eine Flachdichtung 17 angeordnet, die bei geschlossenen Flügeln 14, 15 zwischen diesen und dem Ventilsitz 12 eingeklemmt wird.

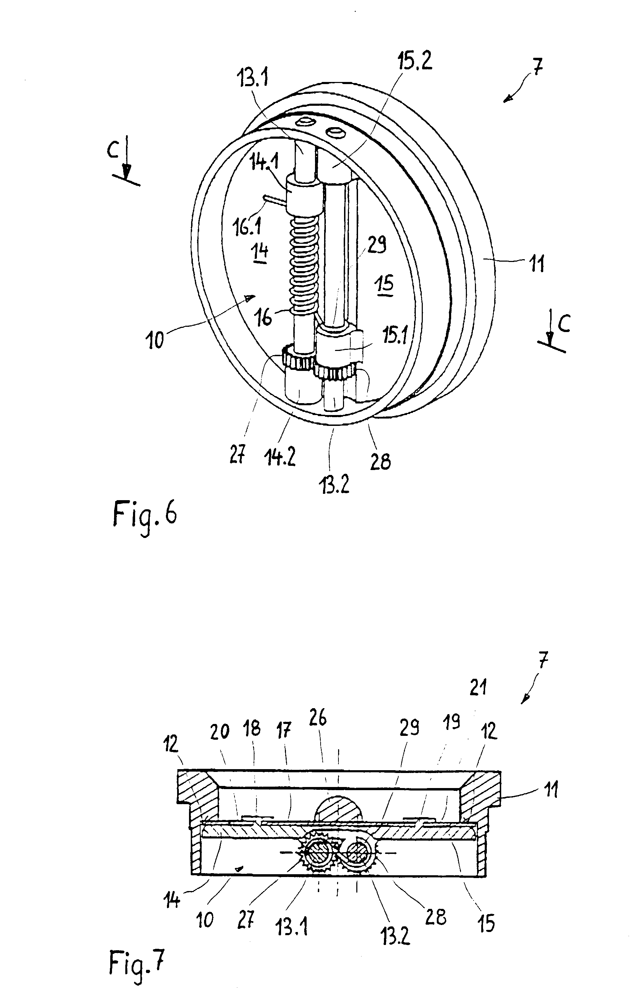

Die Flachdichtung 17 ist formschlüssig auf den Flügeln 14, 15 festgelegt, die dazu Noppen 18, 19 (Fig. 3 und Fig. 5) aufweisen. Im Bereich dieser Noppen 18, 19 ist die Flachdichtung 17 mit Langlöchern 20, 21 versehen, die sich auf einer gedachten Linie lotrecht zur Schwenkachse 13 erstrecken. Zur Befestigung der Flachdichtung 17 werden die Langlöcher 20, 21 etwas quer zu ihrer Längserstreckung gedehnt, so daß sie über die breiteren Köpfe der Noppen 18, 19 passen, hinter denen die Flachdichtung 17 nach ihrem Passieren "einrastet".

Beim Öffnen der Flügel 14, 15 wird die Flachdichtung 17 um die Schwenkachse 13 bzw. die Augen 14.1, 14.2, 15.1, 15.2 gebogen. Damit einher geht eine Vergrößerung der von der Flachdichtung 17 bei geschlossenem Ventil abgedeckten Fläche. Dies würde bei einer starren Festlegung der Flachdichtung 17 auf den Flügeln 14, 15 zu einer Dehnung der Flachdichtung 17 führen. Ermüdungsbrüche der Flachdichtung 17 wären dann nur eine Frage der Zeit. Zudem müßte der den Hauptzähler durchströmende Wasservolumenstrom in diesem Falle auch die Rückhaltekräfte der Flachdichtung 17 auf die Flügel 14, 15 überwinden. Diese Nachteile werden durch die Führung der Flachdichtung 17 in ihren Langlöchern 20, 21 vermieden. Diese kann, auf den Noppen 18, 19 geführt, von den Rändern der Flügel 14, 15 weggleiten, wodurch die oben angesprochene Flächenvergrößerung kompensiert wird. In Fig. 3 ist dieser Zustand an dem extremen Beispiel völlig geöffneter Flügel 14, 15 dargestellt.

Insbesondere aus der Darstellung gemäß Fig. 3 ist ableitbar, daß das aus den beiden Flügeln 14, 15, dem Ventilsitz 12, der Schwenkachse 13, der Flachdichtung 17 und der Feder 16 bestehende Umschaltventil im Falle einer Rückwärtsströmung auch hervorragend als Rückschlagventil geeignet ist. Zur Absicherung des in diesem Falle problematischen Bereichs der Schwenkachse 13, in dem konstruktiv bedingt Spalte vorhanden sind, ist, in Richtung der Rückströmung gesehen, hinter der Schwenkachse 13 ein Steg 26 angeordnet, an der die Flachdichtung 17 anliegt. Sie kann daher z. B. bei einem Druckschlag nicht nach hinten weggedrückt werden.

Beim öffnen der Flügel 14, 15 wird die vorgespannte Feder 16, weitergespannt, d.h., mit zunehmendem Öffnungswinkel der Flügel 14, 15 vergrößern sich die aus der Spiralfeder 16 auf die Flügel 14, 15 in Schließrichtung wirkenden Momente. Dieser Effekt ist unerwünscht, da die Flügel 14, 15 zur Erzielung geringer Druckverluste möglichst weit geöffnet sein sollen. Aus diesem Grunde sind die auf den Flügeln 14, 15 aufliegenden Federenden 16.1, 16.2 jeweils in einer Kulisse 22, 23 geführt. Diese Kulissen 22, 23 sind als sich in radialer Richtung erstreckende, in die Flügel 14 bzw. 15 eingebrachten Nuten ausgebildet. Der Boden 24 dieser Nuten ist somit gegenüber der Oberfläche der Flügel 14, 15 zu rückversetzt. Im Übergang von der Oberfläche der Flügel 14, 15 zum Nutenboden 24 ist eine zur Schwenkachse 13 nach innen geneigte schiefe Ebene 25 vorgesehen. Diese Ausbildung geht im Detail am besten aus Fig. 4 hervor, die die Zuordnung zwischen dem Federende 16.2 und der Kulisse 22 zeigt. Die nachfolgenden Ausführungen beziehen sich auf diese Paarung. Für die Paarung Federende 16.1 und Kulisse 23 gilt analog das gleiche.

Aus Fig. 4 ist ersichtlich, daß bei geschlossenem Flügel 15 das Federende 16.2 auf der Flügeloberfläche lagert. Wird nun eine bestimmte Durchflußmenge erreicht, öffnet der Flügel 15. Die Feder 16 wird dabei um einen bestimmten Betrag um die Schwenkachse 13 gebogen, d.h., die Länge der Feder 16 auf dem Flügel 15 verkürzt sich. Das Federende 16.2 gelangt dadurch auf die schiefe Ebene 25, auf der sie mit zunehmender öffnung des Flügels 15 bis auf den Nutenboden 24 entgegen der Strömungsrichtung nach hinten gleitet. Auf diese Weise wird die beim öffnen des Flügels 15 zunehmende Federkraft reduziert.

Ein zweites Ausführungsbeispiel des Umschaltventil-Einsatzes 7 ist in den Figuren 6 und 7 dargestellt. Im Unterschied zur vorstehend erläuterten Ausführungsform der Erfindung sind hier zwei Schwenkachsen 13.1 und 13.2 vorgesehen, wobei der Flügel 14 an die Schwenkachse 13.1 und der Flügel 15 an die Schwenkachse 13.2 angelenkt ist. Dazu sind die Flügel 14, 15 mit Augen 14.1, 14.2 bzw. 15.1, 15.2 versehen, die von den Schwenkachsen 13.1 bzw. 13.2 durchsetzt werden.

Auf jeder Schwenkachse 13.1, 13.2 sitzt drehfest ein Zahnrad 27 bzw. 28. Die Zahnräder 27, 28 kämmen miteinander, so daß jede Bewegung des einen Flügels 14, 15 synchron auf den anderen Flügel 15, 14 übertragen wird. Dadurch wird bei ungleichmäßiger Beaufschlagung der Flügel 14, 15 verhindert, daß ein Flügel 14, 15 vor dem anderen Flügel 15, 14 öffnet oder schließt bzw. eine andere Winkelstellung zur Strömung einnimmt.

Ein weiterer Unterschied zur vorherigen Ausführungsform besteht darin, daß nur der Flügel 14 durch das Ende 16.1 der Spiralfeder 16 beaufschlagt ist, während sich das andere Ende 29 der Spiralfeder 16 an der Schwenkachse 13.2 abstützt. Eine direkte Abstützung dieses Federendes 29 auf dem Flügel 15 ist hier nicht erforderlich, da dieser aufgrund der miteinander kämmenden Zahnräder 27, 28 indirekt durch das Federende 16.1 beaufschlagt ist.

Ansonsten ist der Umschaltventil-Einsatz 7 bau- und funktionsgleich mit dem der oben erläuterten Ausführungsform, auf die zur Vermeidung von Wiederholungen insofern verwiesen wird. Bau-und funktionsgleiche Bauteile der beiden Ausführungsbeispiele sind mit gleichen Bezugszeichen versehen.

## Patentansprüche

1. Verbundwasserzähler, bestehend aus einem Haupt- und einem Nebenzähler sowie einem Umschaltventil mit einem entgegen der Strömung federbelasteten Verschlußglied, welches in die Schließstellung an einem Ventilsitz anliegt und den Durchfluß durch den Hauptzähler bei Erreichen eines vorbestimmten Grenzdurchflusses freigibt bzw. sperrt, dadurch gekennzeichnet, daß das Verschlußglied als geteilte Klappe ausgebildet ist, deren beiden Flügel (14, 15) an einer in ihrer Teilungsebene liegenden Schwenkachse (13) scharnierartig miteinander verbunden sind, wobei der konstruktiv bedingt Spalten aufweisende Bereich der Schwenkachse (13) auf der stromauf liegenden Seite der Klappe durch eine Flachdichtung (17) abgedeckt ist.

2. Verbundwasserzähler nach Anspruch 1, dadurch gekennzeichnet, daß die Flachdichtung (17) so große radiale Abmessungen besitzt, daß sie bei geschlossenen Flügeln (14, 15) zudem dichtend am Ventilsitz (12) anliegt.

3. Verbundwasserzähler nach Anspruch 1 oder Anspruch 2, dadurch gekennzeichnet, daß die Flachdichtung (17) formschlüssig auf den Flügeln (14, 15) befestigt ist, wozu auf den Flügeln (14, 15) Noppen (18, 19) angeordnet sind, auf denen die Flachdichtung (17) in sich in einer Richtung senkrecht zur Schwenkachse (13) erstreckenden Langlöchern (20, 21) geführt ist.

4. Verbundwasserzähler nach einem der vorstehenden Ansprüche, dadurch gekennzeichnet, daß sich die Flachdichtung (17) im konstruktiv bedingt Spalten aufweisenden Bereich der Schwenkachse (13) an einem stromauf angeordneten Steg (26) abstützt, so daß sie bei geschlossenen Flügeln (14, 15), auch bei Rückströmung, stets dicht an diesem anliegt.

5. Verbundwasserzähler nach einem der vorstehenden Ansprüche, dadurch gekennzeichnet, daß auf der Schwenkachse (13) wenigstens eine vorgespannte Feder (16) angeordnet ist, deren Enden (16.1, 16.2) auf den Flügeln (14, 15) aufliegen und diese in Schließrichtung beaufschlagen.

6. Verbundwasserzähler nach Anspruch 5, dadurch gekennzeichnet, daß an den Stellen, an denen die wenigstens eine Feder (16) ihre Kraft auf die Flügel (14, 15) überträgt, jeweils eine Kulisse (22, 23) zur Führung der Federenden (16.1, 16.2) angeordnet und derart ausgebildet ist, daß der Schwenkwinkel der Federenden (16.1, 16.2) mit zunehmendem Öffnen der Flügel (14, 15) hinter deren Schwenkwinkel zurückbleibt.

7. Verbundwasserzähler nach einem der vorstehenden Ansprüche, dadurch gekennzeichnet, daß anstelle einer gemeinsamen Schwenkachse für jeden Flügel (14, 15) eine separate Schwenkachse (13.1, 13.2) vorgesehen ist.

8. Verbundwasserzähler nach einem der vorstehenden Ansprüche, dadurch gekennzeichnet, daß die beiden Flügel (14, 15) derart miteinander gekoppelt sind, daß sie synchron schließen und/oder öffnen.

9. Verbundwasserzähler nach Anspruch 7 und 8, dadurch gekennzeichnet, daß auf jeder Schwenkachse (13.1, 13.2) ein Zahnrad (27, 28) drehfest angeordnet ist, wobei die Zahnräder (27, 28) miteinander kämmen.
